# FASCICULE DE BREVET EUROPEEN

(11) **EP 2 705 503 B1**
(45) Date de publication et mention de la délivrance du brevet: **22.06.2016**
(21) Numéro de dépôt: 12709916.6
(22) Date de dépôt: 16.02.2012
(51) Int. Cl.: G07C 9/00, G06F 21/00, G06K 9/00

(54) **PROCEDES D'ENROLEMENT ET DE VERIFICATION BIOMETRIQUE, SYSTEMES ET DISPOSITIFS ASSOCIES**
VERFAHREN ZUR BIOMETRISCHEN REGISTRIERUNG UND ÜBERPRÜFUNG SOWIE ENTSPRECHENDE SYSTEME UND VORRICHTUNGEN
METHODS FOR BIOMETRIC REGISTRATION AND VERIFICATION, AND RELATED SYSTEMS AND DEVICES

(30) Priorité: 06.05.2011 FR 1153911
(43) Date de publication de la demande: 12.03.2014
(73) Titulaire: Morpho, 92130 Issy-les-Moulineaux (FR)
(72) Inventeur: BRINGER, Julien, 92130 Issy-les-Moulineaux (FR); CAILLEBOTTE, Stéphane, 92130 Issy-les-Moulineaux (FR); RIEUL, François, 92130 Issy-les-Moulineaux (FR); CHABANNE, Hervé, 92130 Issy-les-Moulineaux (FR)
(74) Mandataire: Cabinet Plasseraud
(86) Numéro de dépôt international: PCT/FR2012/050333
(87) Numéro de publication internationale: WO 2012/153021

(56) Documents cités:
- EP-A1- 1 126 419
- EP-A1- 2 048 592
- EP-A2- 1 873 675
- US-A1- 2009 174 526

## Description

La présente invention concerne l'enrôlement et la vérification biométrique.

La vérification biométrique s'entend traditionnellement de l'authentification ou de l'identification d'individus, humains ou animaux, à partir de données biométriques, relatives à des caractéristiques d'un ou plusieurs attributs biologiques de ces individus, comme les minuties d'empreintes digitales, une forme générale de doigts de la main, les veines d'une main ou d'un doigt, des caractéristiques de la voix, des caractéristiques de l'iris de l'oeil, etc.

Une telle vérification biométrique utilise conventionnellement une base de données stockant des données biométriques relatives à des individus ayant préalablement fait l'objet d'une phase d'inscription dite "enrôlement" pour se voir délivrer, lors d'une vérification biométrique, un droit quelconque (délivrance d'un permis de conduire, d'un titre de transport, d'une indemnisation, autorisation d'accès à un local, etc.).

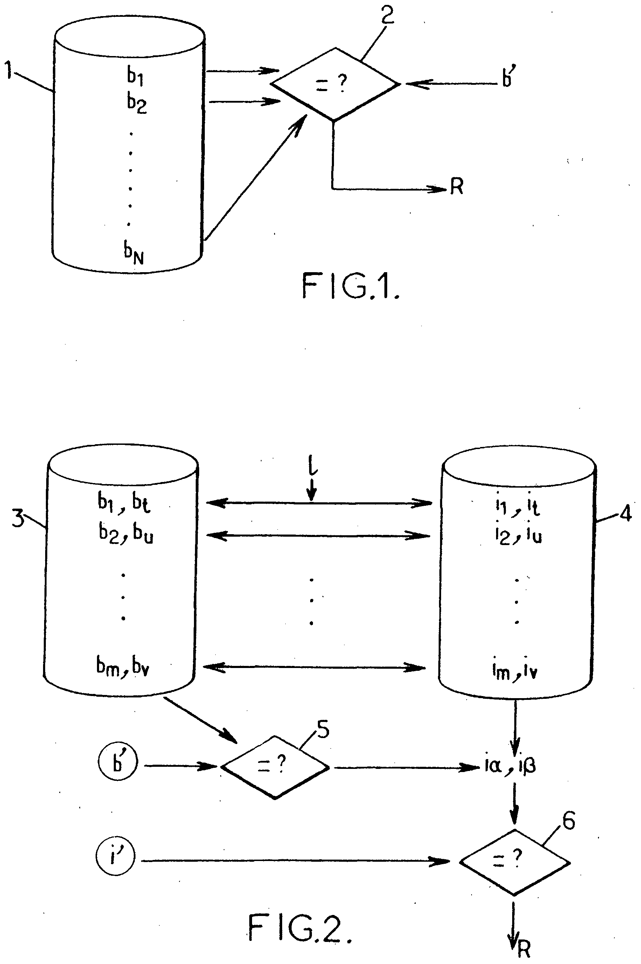

Un exemple très simple de vérification biométrique est illustré sur la figure 1, où l'on distingue une base de données 1 stockant un ensemble de données biométriques b₁, b₂,..., b_{N} relatives à des individus enrôlés.

Ces données biométriques b₁, b₂,..., b_{N} sont par exemple des images représentant tel ou tel attribut biologique d'individus respectifs (par exemple des images d'empreintes digitales, d'iris, etc.), des caractéristiques relatives à un attribut biologique (par exemple un type, une position et une orientation de minuties dans le cas d'empreintes digitales), ou autre.

Avantageusement, une représentation numérique des données biométriques peut être utilisée, de façon à en simplifier la manipulation et à rendre ces données intégrables dans un algorithme cryptographique.

A titre d'exemple non limitatif, les données biométriques b₁, b₂,..., b_{N} stockées dans la base de données 1 peuvent consister chacune en un vecteur numérique, par exemple binaire. De nombreuses façons d'obtenir un vecteur numérique à partir d'informations biométriques sont connues.

Dans l'exemple de la figure 1, la vérification biométrique se passe de la manière suivante relativement à un individu donné. On obtient une donnée biométrique b', par exemple dans sa représentation sous forme de vecteur numérique, de l'individu considéré. Cette donnée b' est comparée à tout ou partie des données b₁, b₂,..., b_{N} stockées dans la base de données 1 (référence 2).

En cas de concordance ou de proximité suffisante, on peut en déduire que l'individu considéré correspond à un individu enrôlé (cas d'une identification) ou à l'individu enrôlé qu'il prétend être (cas d'une authentification). Ce résultat est noté R sur la figure 1.

La base de données biométriques 1 est parfois reliée à une base de données d'identité d'individus (par exemple sous forme alphanumérique). C'est notamment le cas, dans un scénario d'authentification, pour conclure qu'un individu est ou non l'individu enrôlé qu'il prétend être.

Un lien univoque (c'est-à-dire 1 pour 1) entre données biométriques et données d'identité stockées dans ces bases de données pourrait permettre au propriétaire de ces bases de connaître trop facilement la correspondance entre les deux types de données. Ceci peut constituer un problème lorsque ledit propriétaire n'est pas une personne de confiance, ou lorsque des contraintes, par exemple d'ordre législatif, interdisent cette situation. En outre, toute personne indélicate, autre que le propriétaire des bases de données, parvenant à accéder auxdites bases de données pourrait se servir de la correspondance entre les deux types de données pour usurper l'identité d'individus enrôlés.

Il est possible de protéger les données biométriques et/ou d'identité à l'aide d'un algorithme cryptographique, de façon à compliquer la tâche d'une telle personne indélicate. Mais, outre le fait de complexifier la vérification biométrique, cela ne protège pas les données contre le propriétaire des bases de données, car c'est généralement lui qui maîtrise l'algorithme cryptographique et en détient les clés.

Il a également été proposé d'utiliser un "lien faible" entre une base de données biométriques 1 et une base de données d'identité. Un tel lien faible ne permet pas d'établir une correspondance univoque entre données biométriques et données d'identité. Mais il autorise tout de même une recherche d'individu qui aboutit avec un niveau de succès acceptable.

Un exemple schématique de lien faible est donné en référence à la figure 2. La base de données biométriques 3 stocke des groupes de plusieurs données biométriques relatives à des individus différents. Dans l'exemple illustré, ces groupes sont constitués de deux éléments, bien qu'un plus grand nombre d'éléments soit tout-à-fait envisageable, voire recommandé. De la même façon, la base de données d'identité 4 stocke des groupes de plusieurs données d'identité relatives à des individus différents, en l'occurrence deux dans l'exemple de la figure 2, bien qu'un plus grand nombre d'éléments soit là aussi tout-à-fait envisageable. Le nombre de groupes et/ou d'éléments par groupe peut éventuellement différer entre la base de données biométriques 3 et la base de données d'identité 4.

Le lien l ("l" minuscule) entre les deux bases de données 3 et 4 fait correspondre à chaque groupe de données biométriques, par exemple (b₁,bₜ), un groupe respectif de données d'identité, par exemple (i₁,iₜ).

Une personne ayant accès aux bases de données 3 et 4, y compris leur propriétaire, ne peut pas retrouver, avec certitude et sans investigation supplémentaire, la correspondance entre une donnée biométrique et une donnée d'identité (mais seulement entre deux groupes).

Une vérification biométrique reste néanmoins possible. Ainsi, comme illustré sur la figure 2, si un individu avec une biométrie b' et une identité i' se présente pour une authentification par exemple, on vérifie la présence de b' dans la base de données biométriques 3 (étape 5), puis on retrouve le groupe de données d'identité (i_{α},i_{β}) correspondant au groupe de données biométriques auquel b' appartient selon le lien faible l. Un résultat R peut alors être déduit d'une comparaison entre i' et les éléments du groupe (i_{α},i_{β}). Si i' correspond à une des données d'identité i_{α} ou ip, on peut par exemple conclure que l'individu est bien celui qu'il prétend être.

Le recours à un tel lien faible améliore donc la situation. Mais le problème redevient entier lorsque plusieurs bases de données biométriques et/ou d'identité sont utilisées en relation avec de mêmes individus, par exemple dans le cadre de plusieurs applications indépendantes. Dans ce cas en effet, une intersection entre les groupes de données biométriques et/ou d'identité peut permettre de retrouver une correspondance entre certaines données biométriques et des données d'identité respectives.

Plus généralement, le lien, même faible, entre une base de données biométriques et une base de données d'identité représente un maillon faible en ce qui concerne la protection de la vie privée du citoyen.

La demande de brevet EP 1 873 675 décrit un système d'authentification biométrique qui détecte des caractéristiques du corps et compare ces caractéristiques avec des données biométriques enregistrées afin de réaliser une authentification individuelle. Lors d'une authentification 1 :n, au moins deux types (A, B) d'ensembles de données biométriques d'un utilisateur (de la main droite et de la main gauche par exemple) sont enregistrés dans une base de données. La vérification d'un utilisateur est tentée en utilisant un premier type de donnée biométrique, en comparant un premier type de donné nouvellement détecté avec celui déjà enregistré. Le système décide si des ensembles similaires du premier type sont enregistrés pour différents utilisateurs, et, le cas échéant, une vérification est effectuée sur la base de l'ensemble de données du second type. Ceci réduit le risque d'erreur lors de l'identification d'un individu.Un but de la présente invention est de limiter une partie au moins des inconvénients des techniques antérieures décrites ci-dessus.

L'invention propose ainsi un procédé d'enrôlement à des fins ultérieures de vérification biométrique, comprenant les étapes suivantes relativement à un individu :
- obtenir une première donnée biométrique et une deuxième donnée biométrique relatives audit individu ;
- obtenir une donnée alphanumérique incluant au moins un identifiant relatif audit individu ;
- stocker, dans une première base de données biométriques, la première donnée biométrique obtenue, en association avec une clé de déchiffrement ;
- stocker, dans une table de correspondance, une première information parmi la deuxième donnée biométrique et la donnée alphanumérique obtenues, en correspondance avec un index ;
- stocker, dans une deuxième base de données, une deuxième information parmi la deuxième donnée biométrique et la donnée alphanumérique obtenues, distincte de la première information, en association avec une version dudit index chiffrée avec une clé de chiffrement correspondant à ladite clé de déchiffrement.

Un tel enrôlement tire profit d'une donnée biométrique supplémentaire (la deuxième donnée biométrique) par rapport aux techniques classiques rappelées plus haut. Cette donnée biométrique supplémentaire permet d'organiser un lien entre la première donnée biométrique et la donnée alphanumérique.

Ce lien est en outre protégé de manière particulièrement efficace, grâce à l'utilisation complémentaire d'un système d'index et d'un mécanisme de chiffrement/déchiffrement cryptographique de cet index.

On notera que, dans le cadre de la présente invention, le schéma décrit ci-dessus peut être étendu à l'utilisation de plus de deux bases de données et/ou plus d'une table de correspondance, avec l'utilisation de plus de deux données biométriques et/ou plus d'une donnée alphanumérique.

On notera aussi que, toujours dans le cadre de la présente invention, on peut répartir les données dans les bases de données et la (ou les) table(s) de correspondance selon tout schéma de répartition envisageable, de façon à pouvoir vérifier le lien entre les trois types de données comme on le souhaite. La description ci-après donne un exemple particulier de répartition des trois types de données, mais il serait aussi possible d'inverser, dans les bases/table(s) prévues, la clé de déchiffrement et l'index en clair, et/ou l'index chiffré et la clé de déchiffrement, et/ou les différentes données biométriques et alphanumérique, etc. Toutes ces combinaisons sont considérées comme équivalentes et couvertes par la présente invention.

Selon des caractéristiques avantageuses qui peuvent être combinées de toutes les manières envisageables :
- la deuxième donnée biométrique est une donnée biométrique sans trace ; et/ou
- la table de correspondance stocke initialement des informations synthétiques du même type que ladite première information, en correspondance chacune avec un index, et le stockage, dans la table de correspondance, de ladite première information en correspondance avec ledit index comprend le remplacement d'une information synthétique initialement stockée en correspondance avec ledit index par ladite première information ; et/ou
- le même mécanisme peut être mis en oeuvre en remplissant initialement la première base de données et/ou deuxième base de données par des données synthétiques, ce qui complexifie le problème et accentue la protection de la vie privée ;
- ladite première information est stockée dans la table de correspondance en association avec au moins une information synthétique du même type que ladite première information ; et/ou
- ledit index n'est utilisé dans la table de correspondance et dans la deuxième base de données qu'en relation avec la première information et la deuxième information relatives audit individu ; et/ou
- ledit index est utilisé dans la table de correspondance et/ou dans la deuxième base de données en relation avec des informations relatives à plusieurs individus.

L'invention propose en outre un système ou dispositif (le dispositif étant un cas particulier de système qui regroupe l'ensemble des fonctions rendues dans un même habitacle) pour la mise en oeuvre d'un enrôlement tel que mentionné ci-dessus, comprenant relativement à un individu :
- une unité d'obtention d'une première donnée biométrique relative audit individu ;
- une unité d'obtention d'une deuxième donnée biométrique relative audit individu ;
- une unité d'obtention d'une donnée alphanumérique incluant au moins un identifiant relatif audit individu ;
- une première base de données biométriques pour stocker la première donnée biométrique, en association avec une clé de déchiffrement ;
- une table de correspondance pour stocker une première information parmi la deuxième donnée biométrique et la donnée alphanumérique, en correspondance avec un index ;
- une deuxième base de données pour stocker une deuxième information parmi la deuxième donnée biométrique et la donnée alphanumérique obtenues, distincte de la première information, en association avec une version dudit index chiffrée avec une clé de chiffrement correspondant à ladite clé de déchiffrement.

L'invention propose aussi un procédé d'identification biométrique à l'aide d'une première base de données biométriques, d'une deuxième base de données et d'une table de correspondance renseignées au cours d'un procédé d'enrôlement tel que mentionné ci-dessus. Ce procédé d'identification biométrique comprend les étapes suivantes relativement à un individu :
- obtenir une première donnée biométrique relative audit individu ;
- obtenir une première information parmi une deuxième donnée biométrique relative audit individu et une donnée alphanumérique incluant au moins un identifiant relatif audit individu ;
- rechercher une clé de déchiffrement stockée dans la première base de données biométriques en association avec une donnée biométrique correspondant à la première donnée biométrique obtenue ;
- rechercher un index en correspondance duquel une information correspondant à la première information obtenue est stockée dans la table de correspondance ;
- lorsqu'une clé de déchiffrement et un index ainsi recherchés ont été trouvés, retrouver, dans la deuxième base de données, une deuxième information stockée en association avec une version dudit index chiffrée avec une clé de chiffrement correspondant à ladite clé de déchiffrement.

La dernière étape ci-dessus peut par exemple consister à faire un parcours éventuellement exhaustif de la deuxième base de données pour trouver une version dudit index chiffrée avec une clé de chiffrement correspondant à ladite clé de déchiffrement.

L'invention propose aussi un procédé d'authentification biométrique à l'aide d'une première base de données biométriques, d'une deuxième base de données et d'une table de correspondance renseignées au cours d'un procédé d'enrôlement tel que mentionné ci-dessus. Ce procédé d'authentification biométrique comprend les étapes suivantes relativement à un individu :
- obtenir une première donnée biométrique relative audit individu ;
- obtenir une première information parmi une deuxième donnée biométrique relative audit individu et une donnée alphanumérique incluant au moins un identifiant relatif audit individu ;
- obtenir une deuxième information parmi ladite deuxième donnée biométrique relative audit individu et ladite donnée alphanumérique, distincte de la première information ;
- rechercher une clé de déchiffrement stockée dans la première base de données biométriques en association avec une donnée biométrique correspondant à la première donnée biométrique obtenue ;
- rechercher un index en correspondance duquel une information correspondant à la première information obtenue est stockée dans la table de correspondance ;
- rechercher un index chiffré stocké dans la deuxième base de données en association avec une information correspondant à la deuxième information obtenue ;
- lorsqu'une clé de déchiffrement, un index et un index chiffré ainsi recherchés ont été trouvés, vérifier si l'index chiffré correspond à une version dudit index chiffrée avec une clé de chiffrement correspondant à ladite clé de déchiffrement.

L'invention propose aussi un système ou dispositif (le dispositif étant un cas particulier de système qui regroupe l'ensemble des fonctions rendues dans un même habitacle) pour la mise en oeuvre d'une identification biométrique à l'aide d'une première base de données biométriques, d'une deuxième base de données et d'une table de correspondance renseignées au cours d'un procédé d'enrôlement tel que mentionné ci-dessus. Ce système ou dispositif comprend, relativement à un individu :
- une unité d'obtention d'une première donnée biométrique relative audit individu ;
- une unité d'obtention d'une première information parmi une deuxième donnée biométrique relative audit individu et une donnée alphanumérique incluant au moins un identifiant relatif audit individu;
- une unité de recherche d'une clé de déchiffrement stockée dans la première base de données biométriques en association avec une donnée biométrique correspondant à la première donnée biométrique obtenue ;
- une unité de recherche d'un index en correspondance duquel une information correspondant à la première information obtenue est stockée dans la table de correspondance ;
- une unité pour retrouver dans la deuxième base de données, lorsqu'une clé de déchiffrement et un index ont été trouvés, une deuxième information stockée en association avec une version dudit index chiffrée avec une clé de chiffrement correspondant à ladite clé de déchiffrement.

L'invention propose aussi un système ou dispositif (le dispositif étant un cas particulier de système qui regroupe l'ensemble des fonctions rendues dans un même habitacle) pour la mise en oeuvre d'une authentification biométrique à l'aide d'une première base de données biométriques, d'une deuxième base de données et d'une table de correspondance renseignées au cours d'un procédé d'enrôlement tel que mentionné ci-dessus. Ce système ou dispositif comprend, relativement à un individu :
- une unité d'obtention d'une première donnée biométrique relative audit individu ;
- une unité d'obtention d'une première information parmi une deuxième donnée biométrique relative audit individu et une donnée alphanumérique incluant au moins un identifiant relatif audit individu ;
- une unité d'obtention d'une deuxième information parmi ladite deuxième donnée biométrique relative audit individu et ladite donnée alphanumérique, distincte de la première information ;
- une unité de recherche d'une clé de déchiffrement stockée dans la première base de données biométriques en association avec une donnée biométrique correspondant à la première donnée biométrique obtenue ;
- une unité de recherche d'un index en correspondance duquel une information correspondant à la première information obtenue est stockée dans la table de correspondance ;
- une unité de recherche d'un index chiffré stocké dans la deuxième base de données en association avec une information correspondant à la deuxième information obtenue ;
- une unité pour vérifier, lorsqu'une clé de déchiffrement, un index et un index chiffré ont été trouvés, si l'index chiffré correspond à une version dudit index chiffrée avec une clé de chiffrement correspondant à ladite clé de déchiffrement.

L'invention propose encore un produit programme d'ordinateur comprenant des instructions de code pour la mise en oeuvre du procédé d'enrôlement et/ou du procédé d'identification biométrique et/ou du procédé d'authentification biométrique mentionnés ci-dessus, lorsqu'il est chargé et exécuté sur des moyens informatiques.

D'autres particularités et avantages de la présente invention apparaîtront dans la description ci-après d'exemples de réalisation non limitatifs, en référence aux dessins annexés, dans lesquels :
- la figure 1, déjà commentée, est un schéma illustrant un exemple simple de vérification biométrique selon l'art antérieur ;
- la figure 2, déjà commentée, est un schéma illustrant un autre exemple simple de vérification biométrique selon l'art antérieur ;
- la figure 3 est un schéma illustrant un exemple d'enrôlement selon un mode de réalisation non limitatif de l'invention ;
- la figure 4 est un schéma illustrant un exemple de vérification biométrique selon un mode de réalisation non limitatif de l'invention.

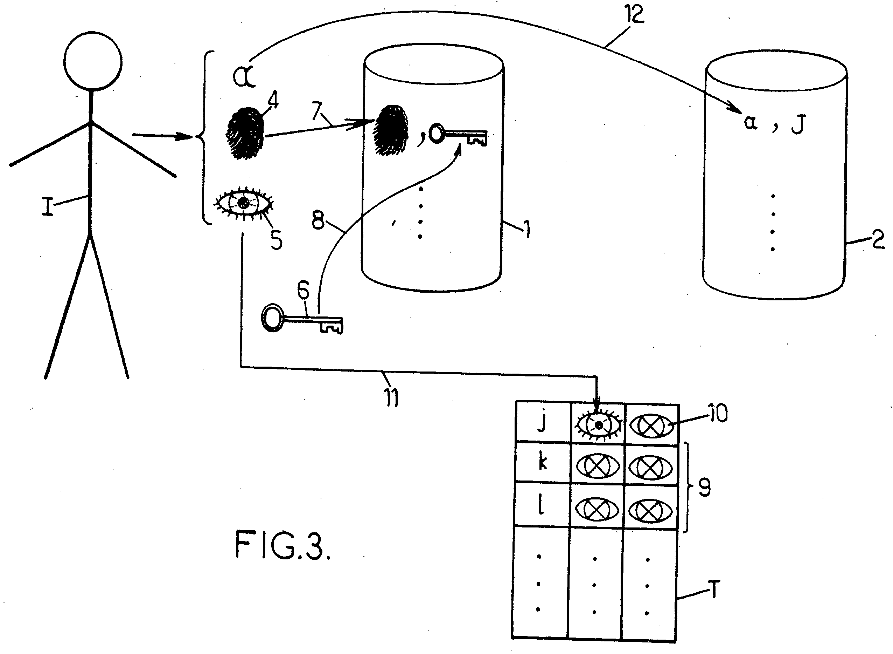

La figure 3 illustre un exemple d'enrôlement selon un aspect de l'invention. On considère ici l'enrôlement d'un individu l ("i" majuscule) quelconque, étant entendu que le même type d'enrôlement peut être mis en oeuvre pour une pluralité d'individus.

Dans le cadre de l'enrôlement, trois données relatives à l'individu I considéré sont obtenues. Il s'agit d'une première donnée biométrique 4, d'une deuxième donnée biométrique 5 et d'une donnée alphanumérique α.

Dans l'exemple illustré sur la figure 3, la première donnée biométrique 4 est une empreinte digitale de l'individu I, éventuellement sous une représentation numérique. La deuxième donnée biométrique 5 est relative à des caractéristiques d'un iris de l'individu I, éventuellement sous une représentation numérique.

On comprendra néanmoins que les données biométriques 4 et 5 pourraient être de tout type envisageable (visage, forme générale de doigts de la main, de veines d'une main ou d'un doigt, caractéristiques de la voix, etc.). Les données biométriques 4 et 5 sont avantageusement de types différents entre elles. De plus, il peut être avantageux que la donnée biométrique 5 soit relative à une biométrie sans trace ou qui ne laisse que peu de traces après le départ de l'individu considéré, comme c'est le cas de l'iris (mais aussi des veines, de la signature vocale et autres). En variante ou en complément, il peut être avantageux que la donnée biométrique 5 soit relative à une biométrie non utilisée dans des documents officiels.

Les moyens d'obtention des données biométriques 4 et 5 sont adaptés à la nature de ces données. Il peut par exemple s'agir d'une unité de capture d'empreintes digitales pour la donnée biométrique 4 et d'une unité de capture d'iris pour la donnée biométrique 5, éventuellement complétées par des modules de traitement des données capturées pour les mettre sous un format attendu. En variante, les données biométriques 4 et/ou 5 pourraient être obtenues sans nouvelle capture, mais à partir de documents (papier ou électroniques) officiels existants, par exemple un passeport qui contient déjà des données biométriques de l'individu I. D'autres exemples peuvent encore être envisagés, comme cela apparaîtra à l'homme du métier.

La donnée alphanumérique α inclut, quant à elle, un identifiant relatif à l'individu I. Cet identifiant peut par exemple inclure ou consister en une identité de l'individu I, ou bien en d'autres types d'informations relatives à l'individu I. A titre d'exemple, la donnée alphanumérique α peut inclure tout ou partie des informations suivantes relativement à l'individu I : son nom, son prénom, sa date de naissance, son numéro de sécurité sociale et/ou autre. En variante ou en complément, elle peut inclure des informations de domiciliation, des informations financières, et/ou autres.

Le format et la façon d'obtenir la donnée alphanumérique α peuvent être divers. Cette donnée alphanumérique peut par exemple résulter de la concaténation de différentes informations alphabétiques et/ou numériques relatives à l'individu I. Mais elle peut aussi provenir d'un traitement plus élaboré, comme par exemple la génération d'un condensé à partir de différentes informations alphabétiques et/ou numériques relatives à l'individu I, e.g. à l'aide d'une fonction de hachage et/ou autre.

Les moyens d'obtention de la donnée alphanumérique α peuvent être divers. Ils peuvent être entièrement manuels, entièrement automatisés, ou bien semi-automatisés. Ils peuvent par exemple comprendre une consultation de documents (papier ou électroniques) officiels existants, par exemple un passeport qui contient déjà des données d'identité de l'individu I. D'autres exemples peuvent encore être envisagés, comme cela apparaîtra à l'homme du métier.

Par souci de simplicité, on parlera ci-après d'empreinte 4, d'iris 5 et d'identifiant α pour désigner respectivement la première donnée biométrique 4, la deuxième donnée biométrique 5 et la donnée alphanumérique α. Ceci ne doit pas être interprété comme une limitation de la généralité du propos.

A l'étape 7, l'empreinte 4 obtenue est ensuite stockée dans une base de données biométriques 1 destinée à recevoir les empreintes (ou éventuellement d'autres types de données biométriques) de tous les individus enrôlés. L'empreinte 4 est stockée en association avec une clé de déchiffrement 6, comme indiqué par la référence 8.

La clé de déchiffrement 6 est une clé cryptographique de toute nature et de toute forme envisageable. Elle peut être associée à n'importe quel type d'algorithme de déchiffrement connu. Elle correspond en outre à une clé de chiffrement cryptographique, c'est-à-dire qu'elle est capable de déchiffrer une donnée chiffrée à l'aide de la clé de chiffrement correspondante. Autrement dit, les deux clés cryptographiques, de chiffrement et de déchiffrement, sont liées. La clé de déchiffrement 6 peut être la même que la clé de chiffrement correspondante (dans le cas d'un chiffrement symétrique) ou bien différente (dans le cas d'un chiffrement asymétrique), comme cela apparaîtra à l'homme du métier.

La clé de déchiffrement 6 peut être générée spécialement pour l'individu I et n'être utilisée pour aucun autre individu enrôlé. En variante, elle pourrait être réutilisée pour tout ou partie des individus enrôlés. La génération de la clé de déchiffrement 6 peut par exemple être réalisée par le propriétaire de la base de données 1 ou autre.

A l'étape 11, l'iris 5 est stocké dans une table de correspondance T, en correspondance avec un index j. Le format et la nature de la table de correspondance T peuvent être divers, comme cela apparaîtra à l'homme du métier. A titre d'exemple, l'index j peut être stocké comme un champ dans la table de correspondance T, au même titre que l'iris 5, comme cela a été représenté sur la figure 3. Selon un autre exemple, l'index j pourrait se déduire directement, par exemple du numéro de ligne où l'iris 5 est stocké dans la table de correspondance T. L'index j peut par exemple consister en une valeur numérique, par exemple une valeur d'entier naturel, ou bien prendre toute autre forme envisageable comme cela apparaîtra à l'homme du métier.

Avantageusement, avant d'être remplie dans le cadre d'un enrôlement, la table de correspondance T stocke initialement des informations synthétiques du même type que l'iris 5. Ces informations synthétiques 9 sont des représentations de faux iris (c'est-à-dire d'iris ne correspondant pas à des individus réels enrôlés). Elles sont stockées chacune en correspondance avec un index k, l,... Ce stockage peut être effectué de façon aléatoire.

Lors de l'enrôlement de l'individu l, le stockage de l'iris 5 dans la table de correspondance T se fait alors par remplacement par cet iris 5 d'une des informations synthétiques, en l'espèce une de celles qui était initialement stockées en correspondance avec l'index j. Le vrai iris 5 peut par exemple remplacer aléatoirement un iris synthétique quelconque stocké dans la table de correspondance T et se voir ainsi attribuer l'index j correspondant à cet iris synthétique.

Un tel recours à des informations synthétiques permet de créer du bruit, qui complique la tâche d'une personne indélicate susceptible d'avoir accès au contenu de la table de correspondance T et désireuse de retrouver de l'information pertinente relative à des individus enrôlés. En l'absence de cette mesure, une telle personne indélicate pourrait facilement détecter les iris des tout premiers individus enrôlés.

On notera qu'en variante ou en complément, un mécanisme du même type peut être mis en oeuvre en relation avec la base de données 1 et/ou la base de données 2. Autrement dit, l'une et/ou l'autre de ces bases de données peut être initialement remplie par des données synthétiques. Cela complexifie la donne pour une personne indélicate et accentue la protection de la vie privée.

Les informations synthétiques 9, comme l'iris 5, pourraient être des images d'iris. Mais il semble préférable d'utiliser des iris codés (ou "iriscodes"), c'est-à-dire des représentations numériques d'iris. En effet, des iris codés à partir d'images synthétiques d'iris, par exemple, semblent difficilement différenciables, voire impossible à différencier, d'iris réels codés. Les iris codés synthétiques paraissent ainsi plus aptes à tromper une personne indélicate que des images de faux iris. On complique ainsi un peu plus la tâche de la personne indélicate.

En variante ou en complément, la table de correspondance T peut stocker plusieurs informations en correspondance avec un index donné. A titre d'exemple non limitatif, un ou plusieurs iris synthétiques 10 peuvent être stockés en correspondance avec l'index j, aux côtés de l'iris 5 de l'individu I, comme illustré sur la figure 3. Il s'agit là d'une autre mesure optionnelle destinée à compliquer la tâche de la personne indélicate, par adjonction de bruit horizontal.

A l'étape 12, l'identifiant α de l'individu I est stocké dans une deuxième base de données 2. Elle y est stockée en association avec une version J de l'index j, chiffrée avec une clé de chiffrement correspondant à la clé de déchiffrement 6.

On notera que les différentes étapes illustrées sur la figure 3 peuvent être mises en oeuvre dans n'importe quel ordre envisageable.

Par ailleurs, tout ou partie des données évoquées plus haut peuvent être stockées en clair ou bien de façon chiffrée, avec les avantages et inconvénients que chacune de ces solutions apportent.

On comprend donc qu'à l'issue des étapes décrites plus haut, la table de correspondance T établit un lien entre l'empreinte 4 et l'identifiant α stockés dans les bases de données 1 et 2 respectivement. Ce lien repose sur une deuxième donnée biométrique, à savoir l'iris 5 dans cet exemple. Le recours à une telle deuxième donnée biométrique est particulièrement simple, puisqu'il s'agit d'une information que l'individu I porte toujours sur lui, sans nécessairement d'ailleurs en connaître le détail.

Ce lien repose aussi sur l'usage d'un index qui agit comme un pointeur entre la table de correspondance T et la base de données 2. Cet index apporte une indirection supplémentaire compliquant la décision par une personne non autorisée.

Ce lien est en outre protégé à l'aide du mécanisme de chiffrement/déchiffrement (l'index étant accessible en clair dans la table de correspondance T, mais seulement en version chiffrée dans la base de données 2 grâce à une clé de chiffrement dont la clé de déchiffrement 6 correspondante n'est stockée que dans la base de données 1), qui complexifie la relation existant entre les trois données 4, 5 et α.

Par ailleurs, l'index j peut n'être utilisé dans la table de correspondance T et dans la base de données 2 (sous sa forme chiffrée J) qu'en relation avec l'iris 5 et l'identifiant α du seul individu I. Il s'agit là d'un lien fort, c'est-à-dire que l'index j assure alors, en combinaison avec la clé de déchiffrement 6 et l'iris 5, une relation 1 pour 1 entre l'empreinte 4 et l'identifiant α.

En variante, le même index j peut être utilisé dans la table de correspondance T et dans la base de données 2 (sous sa forme chiffrée J) en relation avec l'iris et l'identifiant d'un ou plusieurs individus, en plus de l'individu I. On est alors dans un cas de lien faible, où même une connaissance de l'index j et de la clé de déchiffrement 6 associés à l'individu I ne permet pas de retrouver avec certitude et sans investigation supplémentaire la relation entre les trois données 4, 5 et α relatives de l'individu I.

Dans la description ci-dessus, on a choisi que l'empreinte 4, l'iris 5 et l'identifiant α seraient stockés dans la base de données (biométrique) 1, la table de correspondance T et la base de données (alphanumériques) 2 respectivement. Cependant, toute autre répartition envisageable de ces données entre les bases de données 1 et 2 et la table de correspondance T peuvent être utilisées en alternative dans le cadre de la présente invention. A titre d'exemple, l'empreinte 4, l'identifiant α et l'iris 5 pourraient être stockés dans la base de données (biométriques) 1, la table de correspondance T et la base de données (biométriques) 2 respectivement, selon les mêmes principes généraux que ceux décrits plus haut, comme cela apparaîtra à l'homme du métier. Dans ce cas de figure, par exemple, si des informations synthétiques sont utilisées dans la table de correspondance T, comme cela a été envisagé plus haut, il s'agira alors de données alphanumériques incluant des identifiants s factices.

On considère désormais que les bases de données 1 et 2 ainsi que la table de correspondance T ont été renseignées au cours d'un procédé d'enrôlement tel que décrit ci-dessus. Cet enrôlement a pu concerner le seul individu I ou bien une pluralité d'individus.

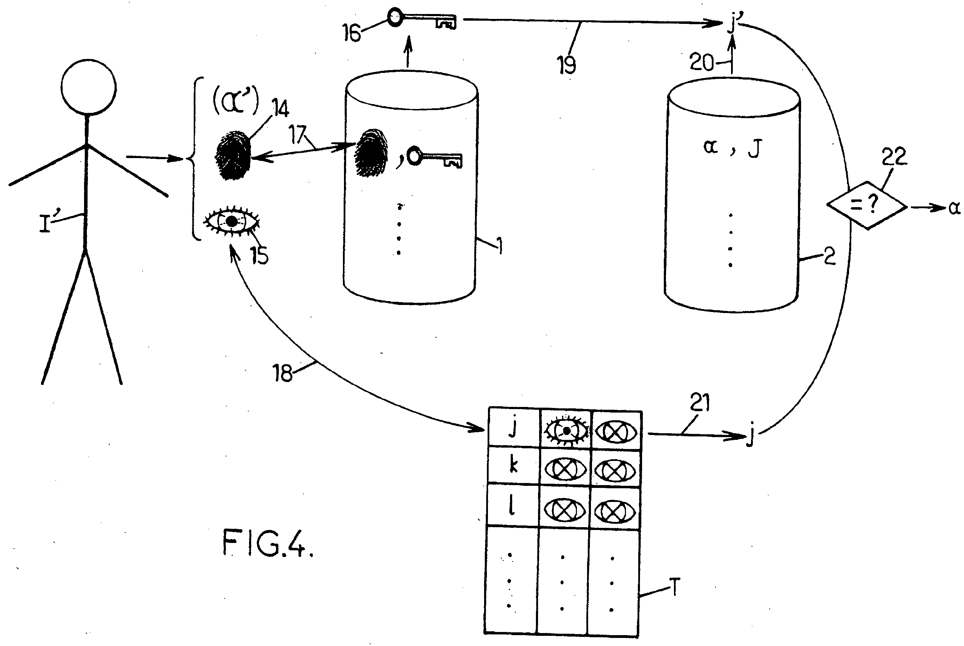

La figure 4 illustre un exemple de vérification biométrique tirant profit des bases de données 1 et 2 et de la table de correspondance T ainsi renseignées.

On considère le cas d'une vérification (c'est-à-dire d'une identification et/ou d'une authentification) biométrique relativement à un individu I', qui peut être le même que l'individu I ou bien un autre individu.

On obtient une première donnée biométrique 14, une deuxième donnée biométrique 15 et, optionnellement, une donnée alphanumérique α' relatives à cet individu I'. Plus généralement, n'importe quel couple parmi les trois données 14, 15 et α' pourrait être obtenu. Ces données sont de type identique ou similaire aux données 4, 5 et α mentionnées plus haut en relation avec l'individu I. Les moyens de les obtenir peuvent aussi être identiques ou similaires à ceux décrits plus haut dans le cadre de l'enrôlement de l'individu I.

Toujours par souci de simplicité, on envisagera ci-après le cas d'une empreinte 14, d'un iris 15 et d'un identifiant α', sans que cela doive être interprété comme une limitation à la généralité du propos.

A l'étape 17, on recherche une clé de déchiffrement stockée dans la base de données biométriques 1 en association avec une empreinte correspondant à l'empreinte 14 de l'individu I'.

Cette recherche peut par exemple consister en un parcours de tout ou partie des empreintes stockées dans la base de données biométriques 1, et pour chacune d'entre elles, en une comparaison avec l'empreinte 14. Cette comparaison peut mettre en oeuvre toute méthode appropriée, telle qu'un calcul d'une distance de Hamming, une comparaison de minuties ou autre, comme cela apparaîtra à l'homme du métier.

En cas de concordance ou de proximité suffisante entre l'empreinte 14 et une empreinte stockée dans la base de données 1, on peut alors retrouver la clé de déchiffrement 16 stockée en association avec cette empreinte. Lorsque l'individu l'est le même que l'individu I enrôlé, la clé de déchiffrement 16 retrouvée est normalement la même que la clé de déchiffrement 6 mentionnée plus haut.

A l'étape 18, on recherche un index en correspondance duquel un iris correspondant à l'iris 15 de l'individu l'est stocké dans la table de correspondance T.

Cette recherche peut par exemple consister en un parcours de tout ou partie des iris stockés dans la table de correspondance T, et pour chacun d'entre eux, en une comparaison avec l'iris 15. Cette comparaison peut mettre en oeuvre toute méthode appropriée, telle qu'un calcul d'une distance de Hamming ou autre, comme cela apparaîtra à l'homme du métier.

En cas de concordance ou de proximité suffisante entre l'iris 15 et un iris stocké dans la table de correspondance T, on peut alors retrouver l'index correspondant. Lorsque l'individu l'est le même que l'individu I enrôlé, l'index retrouvé est normalement le même que l'index j mentionné plus haut (étape 21).

Lorsqu'une clé de déchiffrement 16 et un index ont été trouvés comme décrit ci-dessus, on retrouve alors, dans la deuxième base de données 2, un identifiant α' stocké en association avec une version dudit index chiffrée avec une clé de chiffrement correspondant à la clé de déchiffrement 16.

Pour ce faire, on peut par exemple déchiffrer tout ou partie des index chiffrés stockés dans la base de données 2 à l'aide de la clé de déchiffrement 16 trouvée (étapes 19 et 20), puis comparer l'index j' ainsi déchiffré avec l'index trouvé à l'étape 21 afin de détecter ou non une concordance.

En variante ou en complément, on peut obtenir une clé de chiffrement correspondant à la clé de déchiffrement 16 trouvée (par exemple parce que l'on utilise un chiffrement symétrique dans lequel les clés de chiffrement et de déchiffrement sont identiques, parce que la clé de chiffrement est connue du propriétaire de la base de données 1 qui stocke la clé de déchiffrement 16, ou pour toute autre raison envisageable). Puis on chiffre l'index trouvé à l'étape 21 avec la clé de chiffrement obtenue et on le compare avec un ou plusieurs index chiffrés de la base de données 2.

En variante ou en complément, si l'on dispose de l'identifiant a' de l'individu I', on peut rechercher, dans la base de données 2, l'index chiffré qui est stocké en association avec α'. Puis on peut vérifier si cet index correspond à une version chiffrée de l'index trouvé à l'étape 21.

Avantageusement, les index et le mécanisme de chiffrement/déchiffrement ont pu être définis pour que le déchiffrement d'un quelconque des index chiffrés, à l'aide d'une quelconque des clés de déchiffrement, aboutisse néanmoins à une valeur d'index (éventuellement fausse). Cela peut par exemple être réalisé en utilisant un algorithme de déchiffrement permettant de fournir en valeur de retour un index toujours compris dans un certain intervalle de valeurs, chaque index étant associé à de vrais ou faux iris. L'espace de déchiffrement des index est couvert par la table de correspondance T, i.e. tous les déchiffrements possibles qui vont donner un index doivent se retrouver dans la table de correspondance T afin d'associer un iris (synthétique ou non).

A titre d'exemple non limitatif d'algorithme utilisable dans ce contexte, on peut citer un algorithme de chiffrement de type El Gamal qui correspond bien au besoin de confidentialité des index chiffrés, car le chiffrement est alors probabiliste (deux chiffrements du même index donnent deux valeurs distinctes). Cela restreint la recherche à un seul sens : il faut déchiffrer l'index chiffré pour faire le lien avec l'index dans la table de correspondance T. Dans ce cas, on peut définir la procédure de déchiffrement comme étant le déchiffrement classique El Gamal, mais avec une réduction du résultat modulo la taille de la table T.

On complique ainsi la tâche d'une personne indélicate qui chercherait à écarter des valeurs improbables d'index après déchiffrement, pour tenter de retrouver des informations d'identifiant.

Dans le cas où l'individu l'est le même que l'individu I, l'index j' déchiffré à l'aide de la clé de déchiffrement 16 (identique à la clé de déchiffrement 6) doit être de même valeur que l'index j trouvé à l'étape 21. La comparaison 22 entre ces deux valeurs d'index révèle donc une concordance. L'identification de l'individu I' comme un individu enrôlé est ainsi effectuée avec succès.

L'identifiant α stocké en association avec la version J chiffrée de j' peut en outre être retrouvé.

Cet identifiant α retrouvé peut éventuellement être comparé à l'identifiant α', lorsque ce dernier a été obtenu aux fins de vérification biométrique. On se trouve alors dans un cas d'authentification. Cette comparaison entre α et α' peut intervenir dans une étape finale de vérification, pour valider si l'individu l'est bien l'individu I qu'il prétend être. En variante ou en complément, elle peut être réalisée au préalable, par exemple pour trouver l'index J stocké en association avec α, puis comparer seulement cet index à celui trouvé à l'étape 21 (à un chiffrement ou déchiffrement près), ce qui évite d'avoir à parcourir un grand nombre d'index de la base de données 2.

On notera que les différentes étapes illustrées sur la figure 4 peuvent être mises en oeuvre dans n'importe quel ordre envisageable.

Par ailleurs, lorsque tout ou partie des données évoquées plus haut sont stockées de façon chiffrée, des mécanismes de déchiffrement appropriés sont mis en oeuvre en complément, comme cela apparaîtra à l'homme du métier.

En cohérence avec l'exemple d'enrôlement décrit en référence à la figure 3, on a fait ici encore l'hypothèse que les empreintes, les iris et les identifiants étaient stockés dans la base de données 1, la table de correspondance T et la base de données 2 respectivement. D'autres configurations sont cependant possibles, comme rappelé plus haut. Dans ces cas, la vérification biométrique doit être adaptée en conséquence, comme cela apparaîtra à l'homme du métier.

Ainsi, dans le cas où les empreintes, les identifiants et les iris sont stockés dans la base de données 1, la table de correspondance T et la base de données 2 respectivement, la vérification biométrique peut être réalisée en obtenant l'empreinte 14 de l'individu I' et son identifiant α', en en déduisant une clé de déchiffrement 16 et un index à partir de la base de données 1 et de la table de correspondance T, puis en retrouvant, dans la base de données 2, un iris stocké en association avec une version dudit index chiffrée avec une clé de chiffrement correspondant à ladite clé de déchiffrement. Cet iris peut éventuellement être comparé à un iris 15 de l'individu I' pour apporter une conclusion à la vérification biométrique.

D'autres modes de réalisation peuvent encore être envisagés dans le cadre de la présente invention, comme cela apparaîtra à l'homme du métier.

L'enrôlement tel qu'il a été décrit plus haut peut être réalisé à l'aide d'un système ou d'un dispositif comprenant des unités appropriées à cet effet. Il en est de même pour ce qui est de la vérification biométrique. Les systèmes ou dispositifs utilisés pour l'enrôlement et pour la vérification biométrique peuvent être les mêmes ou bien, au contraire, être différents, malgré éventuellement certaines parties similaires, voire communes.

Ces systèmes ou dispositifs peuvent par exemple comprendre chacun un dispositif électronique et/ou informatique comprenant un module de traitement de données, éventuellement associé à un terminal de capture biométrique.

Tout ou partie des opérations d'enrôlement et/ou de vérification biométrique mentionnées plus haut peuvent être mises en oeuvre à l'aide d'un programme d'ordinateur comprenant des instructions appropriées, lorsqu'il est chargé et exécuté sur des moyens informatiques.

## Revendications

1. Procédé d'enrôlement à des fins ultérieures de vérification biométrique, comprenant les étapes suivantes relativement à un individu (I) :
- obtenir une première donnée biométrique (4) et une deuxième donnée biométrique (5) relatives audit individu ;
- obtenir une donnée alphanumérique (α) incluant au moins un identifiant relatif audit individu ;
- stocker, dans une première base de données biométriques (1), la première donnée biométrique obtenue, en association avec une clé de déchiffrement (6) ;
- stocker, dans une table de correspondance (T), une première information parmi la deuxième donnée biométrique et la donnée alphanumérique obtenues, en correspondance avec un index (j) ;
- stocker, dans une deuxième base de données (2), une deuxième information parmi la deuxième donnée biométrique et la donnée alphanumérique obtenues, distincte de la première information, en association avec une version (J) dudit index chiffrée avec une clé de chiffrement correspondant à ladite clé de déchiffrement.

2. Procédé selon la revendication 1, dans lequel la deuxième donnée biométrique (5) est une donnée biométrique sans trace.

3. Procédé selon la revendication 1 ou 2, dans lequel la table de correspondance (T) stocker initialement des informations synthétiques (9) du même type que ladite première information, en correspondance chacune avec un index (k,l), et dans lequel le stockage, dans la table de correspondance, de ladite première information en correspondance avec ledit index (j) comprend le remplacement d'une information synthétique initialement stockée en correspondance avec ledit index par ladite première information.

4. Procédé selon l'une quelconque des revendications précédentes, dans lequel ladite première information est stockée dans la table de correspondance (T) en association avec au moins une information synthétique (10) du même type que ladite première information.

5. Procédé selon l'une quelconque des revendications précédentes, dans lequel ledit index (j) n'est utilisé dans la table de correspondance (T) et dans la deuxième base de données (2) qu'en relation avec la première information et la deuxième information relatives audit individu.

6. Procédé selon l'une quelconque des revendications 1 à 4, dans lequel ledit index (j) est utilisé dans la table de correspondance (T) et/ou dans la deuxième base de données (2) en relation avec des informations relatives à plusieurs individus.

7. Système ou dispositif pour la mise en oeuvre d'un enrôlement selon l'une quelconque des revendications précédentes, comprenant relativement à un individu (I) :
- une unité d'obtention d'une première donnée biométrique (4) relative audit individu ;
- une unité d'obtention d'une deuxième donnée biométrique (5) relative audit individu ;
- une unité d'obtention d'une donnée alphanumérique (α) incluant au moins un identifiant relatif audit individu ;
- un module de traitement de données pour :
o stocker dans une première base de données biométriques (1) du système la première donnée biométrique, en association avec une clé de déchiffrement (6) ;
o stocker dans une table de correspondance (T) du système une première information parmi la deuxième donnée biométrique et la donnée alphanumérique, en correspondance avec un index (j) ;
o stocker dans une deuxième base de données (2) du système une deuxième information parmi la deuxième donnée biométrique et la donnée alphanumérique obtenues, distincte de la première information, en association avec une version (J) dudit index chiffrée avec une clé de chiffrement correspondant à ladite clé de déchiffrement.

8. Procédé d'identification biométrique à l'aide d'une première base de données biométriques (1), d'une deuxième base de données (2) et d'une table de correspondance (T) renseignées au cours d'un procédé d'enrôlement selon l'une quelconque des revendications 1 à 6, le procédé de d'identification biométrique comprenant les étapes suivantes relativement à un individu (I') :
- obtenir une première donnée biométrique (14) relative audit individu ;
- obtenir une première information parmi une deuxième donnée biométrique (15) relative audit individu et une donnée alphanumérique (α') incluant au moins un identifiant relatif audit individu ;
- rechercher une clé de déchiffrement (16) stockée dans la première base de données biométriques en association avec une donnée biométrique correspondant à la première donnée biométrique obtenue ;
- rechercher un index (j) en correspondance duquel une information correspondant à la première information obtenue est stockée dans la table de correspondance ;
- lorsqu'une clé de déchiffrement et un index ainsi recherchés ont été trouvés, retrouver, dans la deuxième base de données (2), une deuxième information (α) stockée en association avec une version (J) dudit index chiffrée avec une clé de chiffrement correspondant à ladite clé de déchiffrement.

9. Procédé d'authentification biométrique à l'aide d'une première base de données biométriques (1), d'une deuxième base de données (2) et d'une table de correspondance (T) renseignées au cours d'un procédé d'enrôlement selon l'une quelconque des revendications 1 à 6, le procédé d'authentification biométrique comprenant les étapes suivantes relativement à un individu (I') :
- obtenir une première donnée biométrique (14) relative audit individu ;
- obtenir une première information parmi une deuxième donnée biométrique (15) relative audit individu et une donnée alphanumérique (α) incluant au moins un identifiant relatif audit individu ;
- obtenir une deuxième information parmi ladite deuxième donnée biométrique relative audit individu et ladite donnée alphanumérique, distincte de la première information ;
- rechercher une clé de déchiffrement (16) stockée dans la première base de données biométriques en association avec une donnée biométrique correspondant à la première donnée biométrique obtenue ;
- rechercher un index (j) en correspondance duquel une information correspondant à la première information obtenue est stockée dans la table de correspondance ;
- rechercher un index chiffré (J) stocké dans la deuxième base de données (2) en association avec une information correspondant à la deuxième information obtenue ;
- lorsqu'une clé de déchiffrement, un index et un index chiffré ainsi recherchés ont été trouvés, vérifier si l'index chiffré correspond à une version dudit index chiffrée avec une clé de chiffrement correspondant à ladite clé de déchiffrement.

10. Système ou dispositif pour la mise en oeuvre d'une identification biométrique à l'aide d'une première base de données biométriques (1), d'une deuxième base de données (2) et d'une table de correspondance (T) renseignées au cours d'un procédé d'enrôlement selon l'une quelconque des revendications 1 à 6, le système ou dispositif comprenant, relativement à un individu (I') :
- une unité d'obtention d'une première donnée biométrique (14) relative audit individu ;
- une unité d'obtention d'une première information parmi une deuxième donnée biométrique (15) relative audit individu et une donnée alphanumérique (α') incluant au moins un identifiant relatif audit individu;
- une unité de recherche d'une clé de déchiffrement (16) stockée dans la première base de données biométriques en association avec une donnée biométrique correspondant à la première donnée biométrique obtenue ;
- une unité de recherche d'un index (j) en correspondance duquel une information correspondant à la première information obtenue est stockée dans la table de correspondance ;
- une unité pour retrouver dans la deuxième base de données (2), lorsqu'une clé de déchiffrement et un index ont été trouvés, une deuxième information stockée en association avec une version (J) dudit index chiffrée avec une clé de chiffrement correspondant à ladite clé de déchiffrement.

11. Système ou dispositif pour la mise en oeuvre d'une authentification biométrique à l'aide d'une première base de données biométriques (1), d'une deuxième base de données (2) et d'une table de correspondance (T) renseignées au cours d'un procédé d'enrôlement selon l'une quelconque des revendications 1 à 6, le système ou dispositif comprenant, relativement à un individu (I') :
- une unité d'obtention d'une première donnée biométrique (14) relative audit individu ;
- une unité d'obtention d'une première information parmi une deuxième donnée biométrique (15) relative audit individu et une donnée alphanumérique (α') incluant au moins un identifiant relatif audit individu ;
- une unité d'obtention d'une deuxième information parmi ladite deuxième donnée biométrique relative audit individu et ladite donnée alphanumérique, distincte de la première information ;
- une unité de recherche d'une clé de déchiffrement (16) stockée dans la première base de données biométriques en association avec une donnée biométrique correspondant à la première donnée biométrique obtenue ;
- une unité de recherche d'un index (j) en correspondance duquel une information correspondant à la première information obtenue est stockée dans la table de correspondance ;
- une unité de recherche d'un index chiffré (J) stocké dans la deuxième base de données (2) en association avec une information correspondant à la deuxième information obtenue ;
- une unité pour vérifier, lorsqu'une clé de déchiffrement, un index et un index chiffré ont été trouvés, si l'index chiffré correspond à une version dudit index chiffrée avec une clé de chiffrement correspondant à ladite clé de déchiffrement.

12. Produit programme d'ordinateur comprenant des instructions de code pour la mise en oeuvre du procédé d'enrôlement selon l'une quelconque des revendications 1 à 6 et/ou du procédé d'identification biométrique selon la revendication 8 et/ou du procédé d'authentification biométrique selon la revendication 9, lorsqu'il est chargé et exécuté sur des moyens informatiques.

## Patentansprüche

1. Verfahren zur Registrierung für künftige biometrische Überprüfungszwecke, wobei das Verfahren auf ein Individuum (I) bezogen die folgenden Schritte aufweist:
- Gewinnen eines das Individuum betreffenden ersten biometrischen Datensatzes (4) und eines das Individuum betreffenden zweiten biometrischen Datensatzes (5);
- Gewinnen eines alphanumerischen Datensatzes (α), der mindestens einen das Individuum betreffenden Identifikator aufweist;
- Speichern des gewonnenen ersten biometrischen Datensatzes in Verknüpfung mit einem Dechiffrierungsschlüssel (6) in einer ersten Datenbank (1) biometrischer Datensätze;
- Speichern einer ersten Information, die unter dem gewonnenen zweiten biometrischen Datensatz und dem gewonnenen alphanumerischen Datensatz ausgewählt ist, in Zuordnung zu einem Index (j) in einer Zuordnungstabelle (T);
- Speichern einer zweiten Information, die unter dem gewonnenen zweiten biometrischen Datensatz und dem gewonnenen alphanumerischen Datensatz ausgewählt ist und sich von der ersten Information unterscheidet, in Verknüpfung mit einer Version (J) des Indexes, die mit einem Chiffrierungsschlüssel chiffriert ist, der dem Dechiffrierungsschlüssel entspricht, in einer zweiten Datenbank (2).

2. Verfahren nach Anspruch 1, in welchem der zweite biometrische Datensatz (5) ein spurloser biometrischer Datensatz ist.

3. Verfahren nach Anspruch 1 oder 2, in welchem die Zuordnungstabelle (T) anfänglich synthetische Informationen (9) desselben Typs wie die erste Information jeweils in Zuordnung zu einem Index (k,l) gespeichert hat und in welchem das Speichern der ersten Information in der Zuordnungstabelle in Zuordnung zu dem Index (j) das Austauschen einer in Zuordnung zu diesem Index anfänglich gespeicherten synthetischen Information durch die erste Information aufweist.

4. Verfahren nach einem der vorstehenden Ansprüche, in welchem die erste Information zusammen mit mindestens einer synthetischen Information (10) desselben Typs wie die erste Information in der Zuordnungstabelle (T) gespeichert wird.

5. Verfahren nach einem der vorstehenden Ansprüche, in welchem der Index (j) in der Zuordnungstabelle (T) und in der zweiten Datenbank (2) nur in Beziehung mit der dieses Individuum betreffenden ersten Information und der dieses Individuum betreffenden zweiten Information verwendet wird.

6. Verfahren nach einem der Ansprüche 1 bis 4, in welchem der Index (j) in der Zuordnungstabelle (T) und/oder in der zweiten Datenbank (2) in Beziehung mit Informationen, die mehrere Individuen betreffen, verwendet wird.

7. System oder Vorrichtung zur Durchführung einer Registrierung nach einem der vorstehenden Ansprüche bezogen auf ein Individuum (I), aufweisend:
- eine Einheit zum Gewinnen eines ersten das Individuum betreffenden biometrischen Datensatzes (4);
- eine Einheit zum Gewinnen eines zweiten das Individuum betreffenden biometrischen Datensatzes (5);
- eine Einheit zum Gewinnen eines alphanumerischen Datensatzes (α), der mindestens einen das Individuum betreffenden Identifikator aufweist;
- ein Datenverarbeitungsmodul zum
o Speichern des ersten biometrischen Datensatzes in Verknüpfung mit einem Dechiffrierungsschlüssel (6) in einer ersten Datenbank (1) biometrischer Datensätze des Systems;
o Speichern einer ersten Information, die unter dem zweiten biometrischen Datensatz und dem alphanumerischen Datensatz ausgewählt ist, in einer Zuordnungstabelle (T) des Systems in Zuordnung zu einem Index (j);
o Speichern einer zweiten Information, die unter dem gewonnenen zweiten biometrischen Datensatz und dem gewonnenen alphanumerischen Datensatz ausgewählt ist und die sich von der ersten Information unterscheidet, in Verknüpfung mit einer Version (J) des Indexes, die mit einem Chiffrierungsschlüssel chiffriert ist, der dem Dechiffrierungsschlüssel entspricht, in einer zweiten Datenbank (2).

8. Verfahren zur biometrischen Identifikation mit Hilfe einer ersten Datenbank biometrischer Datensätze (1), einer zweiten Datenbank (2) und einer Zuordnungstabelle (T), die im Verlaufe eines Registrierungsverfahrens nach einem der Ansprüche 1 bis 6 eingelernt worden sind, wobei das biometrische Identifikationsverfahren für jeweils ein Individuum (I') die folgenden Schritte aufweist:
- Gewinnen eines das Individuum betreffenden ersten biometrischen Datensatzes (14);
- Gewinnen einer ersten Information, die unter einem das Individuum betreffenden zweiten biometrischen Datensatz (15) und einem alphanumerischen Datensatz (α'), der mindestens einen das Individuum betreffenden Identifikator aufweist, ausgewählt ist;
- Suchen eines Dechiffrierungsschlüssels (16), der in der ersten Datenbank biometrischer Datensätze in Verknüpfung mit einem biometrischen Datensatz, der dem gewonnenen ersten biometrischen Datensatz entspricht, gespeichert ist;
- Suchen eines Indexes (j), der in Zuordnung zu einer Information, die der gewonnenen ersten Information entspricht, in der Zuordnungstabelle gespeichert ist;
- wenn ein gesuchter Dechiffrierungsschlüssel und ein gesuchter Index gefunden worden sind: Auslesen einer zweiten Information (α), die in Verknüpfung mit einer Version (J) des Indexes gespeichert ist, die mit einem Chiffrierungsschlüssel, der dem Dechiffrierungsschlüssel entspricht, chiffriert ist, aus der zweiten Datenbank (2).

9. Verfahren zur biometrischen Authentifizierung mit Hilfe einer ersten Datenbank biometrischer Datensätze (1), einer zweiten Datenbank (2) und einer Zuordnungstabelle (T), die im Verlaufe eines Registrierungsverfahrens nach einem der Ansprüche 1 bis 6 eingelernt worden sind, wobei das biometrische Identifikationsverfahren für jeweils ein Individuum (I') die folgenden Schritte aufweist:
- Gewinnen eines das Individuum betreffenden ersten biometrischen Datensatzes (14);
- Gewinnen einer ersten Information, die unter einem das Individuum betreffenden zweiten biometrischen Datensatz (15) und einem alphanumerischen Datensatz (α'), der mindestens einen das Individuum betreffenden Identifikator aufweist, ausgewählt ist;
- Gewinnen einer zweiten Information, die unter dem das Individuum betreffenden zweiten biometrischen Datensatz und dem alphanumerischen Datensatz ausgewählt ist und die sich von der ersten Information unterscheidet;
- Suchen eines Dechiffrierungsschlüssels (16), der in der ersten Datenbank biometrischer Datensätze in Verknüpfung mit einem biometrischen Datensatz, der dem gewonnenen ersten biometrischen Datensatz entspricht, gespeichert ist;
- Suchen eines Indexes (j), der in Zuordnung zu einer Information, die der gewonnenen ersten Information entspricht, in der Zuordnungstabelle gespeichert ist;
- Suchen eines chiffrierten Indexes (J), der in der zweiten Datenbank (2) in Verknüpfung mit einer Information, die der gewonnenen zweiten Information entspricht, gespeichert ist;
- wenn ein gesuchter Dechiffrierungsschlüssel und ein gesuchter Index und ein gesuchter chiffrierter Index gefunden worden sind: Prüfen, ob der chiffrierte Index einer Version des Indexes entspricht, die mit einem Chiffrierungsschlüssel, der dem Dechiffrierungsschlüssel entspricht, chiffriert ist.

10. System oder Vorrichtung zur Durchführung einer biometrischen Identifikation mit Hilfe einer ersten Datenbank biometrischer Datensätze (1), einer zweiten Datenbank (2) und einer Zuordnungstabelle (T), die im Verlaufe eines Registrierungsverfahrens nach einem der Ansprüche 1 bis 6 eingelernt worden sind, wobei das System oder die Vorrichtung bezogen auf ein Individuum (I') aufweisen:
- eine Einheit zum Gewinnen eines das Individuum betreffenden ersten biometrischen Datensatzes (14);
- eine Einheit zum Gewinnen einer ersten Information, die unter einem das Individuum betreffenden zweiten biometrischen Datensatz (15) und einem alphanumerischen Datensatz (α'), der mindestens einen das Individuum betreffenden Identifikator aufweist, ausgewählt ist;
- eine Einheit zum Suchen eines Dechiffrierungsschlüssels (16), der in der ersten Datenbank biometrischer Datensätze in Verknüpfung mit einem biometrischen Datensatz, der dem gewonnenen ersten biometrischen Datensatz entspricht, gespeichert ist;
- eine Einheit zum Suchen eines Indexes (j), der in Zuordnung zu einer Information, die der gewonnenen ersten Information entspricht, in der Zuordnungstabelle gespeichert ist;
- eine Einheit zum Auslesen einer zweiten Information, die in Verknüpfung mit einer Version (J) des Indexes gespeichert ist, die mit einem Chiffrierungsschlüssel, der dem Dechiffrierungsschlüssel entspricht, chiffriert ist, aus der zweiten Datenbank, wenn ein Dechiffrierungsschlüssel und ein Index gefunden worden sind.

11. System oder Vorrichtung zur Durchführung einer biometrischen Authentifizierung mit Hilfe einer ersten Datenbank biometrischer Datensätze (1), einer zweiten Datenbank (2) und einer Zuordnungstabelle (T), die im Verlaufe eines Registrierungsverfahrens nach einem der Ansprüche 1 bis 6 eingelernt worden sind, wobei das System oder die Vorrichtung bezogen auf ein Individuum (I') aufweisen:
- eine Einheit zum Gewinnen eines das Individuum betreffenden ersten biometrischen Datensatzes (14);
- eine Einheit zum Gewinnen einer ersten Information, die unter einem das Individuum betreffenden zweiten biometrischen Datensatz (15) und einem alphanumerischen Datensatz (α'), der mindestens einen das Individuum betreffenden Identifikator aufweist, ausgewählt ist;
- eine Einheit zum Gewinnen einer zweiten Information, die unter dem das Individuum betreffenden zweiten biometrischen Datensatz und dem alphanumerischen Datensatz ausgewählt ist und die sich von der ersten Information unterscheidet;
- eine Einheit zum Suchen eines Dechiffrierungsschlüssels (16), der in der ersten Datenbank biometrischer Datensätze in Verknüpfung mit einem biometrischen Datensatz, der dem gewonnenen ersten biometrischen Datensatz entspricht, gespeichert ist;
- eine Einheit zum Suchen eines Indexes (j), der in Zuordnung zu einer Information, die der gewonnenen ersten Information entspricht, in der Zuordnungstabelle gespeichert ist;
- eine Einheit zum Suchen eines chiffrierten Indexes (J), der in der zweiten Datenbank (2) in Verknüpfung mit einer Information, die der gewonnenen zweiten Information entspricht, gespeichert ist;
- eine Einheit zum Prüfen, wenn ein Dechiffrierungsschlüssel, ein Index und ein chif frierter Index gefunden worden sind, ob der chiffrierte Index einer Version des Indexes entspricht, die mit einem Chiffrierungsschlüssel, der dem Dechiffrierungsschlüssel entspricht, chiffriert ist.

12. Computerprogrammprodukt, das codierte Befehle aufweist, die das Registrierungsverfahren nach einem der Ansprüche 1 bis 6 und/oder das biometrische Identifikationsverfahren nach Anspruch 8 und/oder das biometrische Authentifizierungsverfahren nach Anspruch 9 durchführen, wenn das Programmprodukt in Informationsverarbeitungseinrichtungen geladen und gestartet worden ist.

## Claims

1. Enrollment method for future biometric verification purposes, comprising the following steps relative to an individual (I):
- obtaining first biometric data (4) and second biometric data (5) relating to said individual;
- obtaining alphanumeric data (α) including at least one identifier relating to said individual;
- storing the obtained first biometric data, in a first biometric database (1), in association with a decryption key (6);
- storing, in a mapping table (T), first information from among the obtained second biometric data and the obtained alphanumeric data, in correspondence with an index (j);
- storing, in a second database (2), second information from among the obtained second biometric data and the obtained alphanumeric data, in association with a version (J) of said index that is encrypted with an encryption key corresponding to said decryption key, said second information being different from the first information.

2. Method according to claim 1, wherein the second biometric data (5) is traceless biometric data.

3. Method according to claim 1 or 2, wherein the mapping table (T) initially stores synthetic information (9) of the same type as said first information, each with a corresponding index (k,l), and wherein the storing of said first information with said corresponding index (j), in the mapping table, comprises the replacing of the synthetic information initially stored in correspondence to said index by said first information.

4. Method according to any of the above claims, wherein said first information is stored in the mapping table (T) in association with at least one piece of synthetic information (10) of the same type as said first information.

5. Method according to any of the above claims, wherein said index (j) is only used in the mapping table (T) and in the second database (2) in relation to the first information and second information relating to said individual.

6. Method according to any of claims 1 to 4, wherein said index (j) is used in the mapping table (T) and/or in the second database (2) in relation to information relating to multiple individuals.

7. System or device for implementing an enrollment according to any of the above claims, comprising, relative to an individual (I):
- a unit for obtaining first biometric data (4) relating to said individual;
- a unit for obtaining second biometric data (5) relating to said individual;
- a unit for obtaining alphanumeric data (α) including at least one identifier relating to said individual;
- a data processing module for:
o storing, in a first biometric database (1) of the system, the first biometric data, in association with a decryption key (6);
o storing, in a mapping table (T) of the system, first information from among the second biometric data and the alphanumeric data, with a corresponding index (j);
o storing, in a second database (2) of the system, second information, from among the obtained second biometric data and the obtained alphanumeric data, in association with a version (J) of said index encrypted with an encryption key corresponding to said decryption key, said second information being different from the first information.

8. Biometric identification method making use of a first biometric database (1), a second database (2), and a mapping table (T) which are supplied with data during the course of an enrollment method according to any of claims 1 to 6, said biometric identification method comprising the following steps relative to an individual (I'):
- obtaining first biometric data (14) relating to said individual;
- obtaining first information, from among second biometric data (15) relating to said individual and alphanumeric data (α') including at least one identifier relating to said individual;
- searching for a decryption key (16) stored in the first biometric database in association with biometric data corresponding to the obtained first biometric data;
- searching for an index (j) corresponding to information stored in the mapping table, said information corresponding to the obtained first information;
- finding in the second database (2), when a decryption key and an index searched for in this manner have been found, second information (α) stored in association with a version (J) of said index encrypted with an encryption key corresponding to said decryption key.

9. Biometric authentication method making use of a first biometric database (1), a second database (2), and a mapping table (T) which are supplied with data in the course of an enrollment method according to any of claims 1 to 6, said biometric authentication method comprising the following steps relative to an individual (I'):
- obtaining first biometric data (14) relating to said individual;
- obtaining first information, from among second biometric data (15) relating to said individual and alphanumeric data (α') including at least one identifier relating to said individual;
- obtaining second information, from among said second biometric data relating to said individual and said alphanumeric data, said second information being different from the first information;
- searching for a decryption key (16) stored in the first biometric database in association with biometric data corresponding to the obtained first biometric data;
- searching for an index (j) corresponding to information stored in the mapping table, said information corresponding to the obtained first information;
- searching for an encrypted index (J) stored in the second database (2) in association with information corresponding to the obtained second information;
- when a decryption key, index, and encrypted index searched for in this manner have been found, verifying whether the encrypted index corresponds to a version of said index encrypted with an encryption key corresponding to said decryption key.

10. System or device for implementing a biometric identification making use of a first biometric database (1), a second database (2), and a mapping table (T) which are supplied with data during the course of an enrollment method according to any of claims 1 to 6, the system or device comprising, relative to an individual (I'):
- a unit for obtaining first biometric data (14) relating to said individual;
- a unit for obtaining first information, from among second biometric data (15) relating to said individual and from alphanumeric data (α') including at least one identifier relating to said individual;
- a unit for searching for a decryption key (16) stored in the first biometric database in association with biometric data corresponding to the obtained first biometric data;
- a unit for searching for an index (j) corresponding to information stored in the mapping table, said information corresponding to the obtained first information;
- a unit for finding in the second database (2), when a decryption key and an index have been found, second information stored in association with a version (J) of said index encrypted with an encryption key corresponding to said decryption key.

11. System or device for implementing a biometric authentication making use of a first biometric database (1), a second database (2), and a mapping table (T) which are supplied with data during the course of an enrollment method according to any of claims 1 to 6, the system or device comprising, relative to an individual (I'):
- a unit for obtaining first biometric data (14) relating to said individual;
- a unit for obtaining first information, from among second biometric data (15) relating to said individual and alphanumeric data (α') including at least one identifier relating to said individual;
- a unit for obtaining second information, from among said second biometric data relating to said individual and said alphanumeric data, said second information being different from the first information;
- a unit for searching for a decryption key (16) stored in the first biometric database in association with biometric data corresponding to the obtained first biometric data;
- a unit for searching for an index (j) corresponding to information stored in the mapping table, said information corresponding to the obtained first information;
- a unit for searching for an encrypted index (J) stored in the second database (2) in association with information corresponding to the obtained second information;
- a unit for verifying, when a decryption key, index, and encrypted index have been found, whether the encrypted index corresponds to a version of said index encrypted with an encryption key corresponding to said decryption key.

12. Computer program product comprising instruction code for implementing the enrollment method according to any of claims 1 to 6 and/or the biometric identification method according to claim 8 and/or the biometric authentication method according to claim 9, when it is loaded into and executed by computer means.
